# EUROPEAN PATENT APPLICATION

(11) **EP 4 389 531 A1**
(43) Date of publication of application: **26.06.2024**
(21) Application number: 22215811.5
(22) Date of filing: 22.12.2022
(51) Int. Cl.: B60R 16/023

(54) **ELECTRONIC DEVICE FOR POWER CONSUMPTION MONITORING**

(71) Applicant: Polestar Performance AB, 405 31 Gothenburg (SE)
(72) Inventor: Fogelklou, Christopher, 418 71 Göteborg (SE)
(74) Representative: Zacco Sweden AB

(57) **Abstract**

The present invention provides an electronic device (100, 200, 100_1, 100_2, 100_3) for monitoring power consumption of an electronic unit (103) for a vehicle, the electronic device comprising: a current monitoring unit (102) for monitoring the power consumption of the electronic unit (103); a communication unit (106) for reporting the power consumption data of the electronic unit (103) to a receiving unit (105); wherein the communication unit (106) is a low-power wireless communication unit, and the electronic device (103) is arranged to be fitted in a standard fuse slot of a fuse box (101) connected to the electronic unit (103).

## Description

### TECHNICAL FIELD

The present invention generally relates to power consumption monitoring, in particular, to an electronic device for power consumption monitoring of an electronic unit for a vehicle.

### BACKGROUND

Modern vehicles have many electronic units embedded in the automotive electronic system. These electronic units include a group of units named Electronic Control Unit (ECU) for controlling functions ranging from the essential, such as engine and power steering control; to comfort, such as power windows, seats, heating, ventilation, and air conditioning; to security and access, such as door locks and keyless entry. The ECUs may include a plurality of modules for performing various control functions of the vehicles, such as engine control module (ECM), powertrain control module (PCM), central control module (CCM), general electronic module (GEM), etc. Some vehicles may have up to 150 ECUs. The ECUs may be powered by the batteries of the vehicle. These ECUs are normally arranged at different locations in the vehicle, and variously connected to the vehicle's power unit. The complexity of monitoring the power consumption of each ECU has been increased significantly with the large number of ECUs in a vehicle. Sometimes, the ECUs may unexpectedly consume power from the battery. It is a challenge for many automakers to identify the electronic unit, such as an ECU, causing the excessive power consumption in a vehicle in which all such electronic units should be idle.

In a traditional way, it is inconvenient or even impossible to measure or monitor the current of electronic units when they are supposed to be in an idle status. The situation is usually that one or more of the electronic units are awake when they are supposed to be sleeping, and, in such a case, entering a vehicle service mode to diagnose the issue would "disturb the environment," causing all the other electronic units to wake up. The only foolproof way to do this today is to remove the power connection of the electronic units, one by one, until the unexpected current drain stops. This is problematic since once the power connection of the electronic units are removed, the operator cannot do any tests to figure out what led to the problem in the first place.

Furthermore, it is inconvenient or even impossible in prior art to monitor the power consumption of each electronic unit in real-time or periodically. Therefore, an innovative solution to these problems is needed.

### SUMMARY

Accordingly, examples of the present invention preferably seek to mitigate, alleviate, or eliminate one or more deficiencies, disadvantages, or issues in the art, such as the above-identified, singly or in any combination by providing a device according to the appended patent claims.

This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect of the present invention, there is provided an electronic device for monitoring power consumption of an electronic unit for a vehicle. The electronic device comprises a current monitoring unit for monitoring the power consumption of the electronic unit. The electronic device further comprises a communication unit for reporting the power consumption data of the electronic unit to a receiving unit. The communication unit is a low-power wireless communication unit. The electronic device is arranged to be fitted in a standard fuse slot connected to the electronic unit.

With the above electronic device, the power consumption of the electronic unit for the vehicle is monitored and wirelessly reported. The monitoring of the power consumption of the electronic unit is based on the concept that the current drawn by the electronic unit is monitored and reported wirelessly by the electronic device. The current draining data is advantageously reported by a low-power wireless communication unit so that no extra wires are needed for transmitting the power consumption data. Furthermore, a receiving unit may present the power consumption data conveniently and instantly to a user when the data is received by the receiving unit. Since the low-power wireless communication unit draws very small amount of power, even a low power battery device such as a button cell battery, may be used for a long period to provide power to the low-power wireless communication unit. The electronic device is configured to be fitted in a standard fuse slot which is connected to the electronic unit. No external wires are needed for the connection between the electronic device and the fuse slot which ensures the application of the electronic device to be convenient and simple. It is an advantage of the present invention that such an electronic device may be manufactured in a cost-efficient way by using the low-power wireless communication unit and to be fitted in the standard fuse slot. Advantageously, the wireless reporting function of the communication unit provides a convenient and effective monitoring solution for identifying any power consumption problem of the electronic unit that may cause battery drain of the vehicle.

According to an embodiment of the present invention, the electronic device further comprises a power unit for powering the electronic device, wherein the power unit is a button cell battery. It is an advantage that the electronic device may be used without external power cables. It may work for a long period with the power of the battery. It may be manufactured in a small size and provide a small footprint.

According to an embodiment of the present invention, there is provided an electronic device being configured to monitor the power consumption of the electronic unit when the electronic unit is in an idle status and/or in a working status. The power consumption may be monitored in any status of the electronic unit, which provides a better battery consuming monitoring capability.

According to an embodiment of the present invention, the power consumption data reported by the communication unit is at least one of: real-time monitoring data, periodically monitoring data and recorded monitoring data. With this arrangement, the monitoring data may be reported and/or logged continuously or discontinuously during the working status, and/or during the idle status of the electronic unit.

According to an embodiment of the present invention, the electronic device further comprises a processing unit for determining whether the power consumption of the electronic unit exceeds a threshold. The processing unit is advantageous for performing necessary functions for determining an action based on the threshold value.

According to an embodiment of the present invention, the communication unit of the electronic device is configured to report the power consumption of the electronic unit upon connection to the receiving unit or when the power consumption exceeds the threshold. With the threshold, it is ensured that any power consumption over the threshold is reported to the receiving unit such that it is possible to instantly detect unexpected power consumption which is over the threshold. With the arrangement of reporting upon connection to the receiving unit, it ensures the receiving unit receives the power consumption data when needed.

According to an embodiment of the present invention, the communication unit is at least one of: a Bluetooth Low Energy (BLE) communication unit, a Zigbee unit and Z-wave unit. This ensures that the communication unit does not cause excessive power consumption and may work for a long period even with a low-capacity power supply.

According to an embodiment of the present invention, the communication unit is configured to report the power consumption data at specific advertising intervals to the receiving unit.

According to some further embodiments of the present invention, a period between every two consecutive advertising intervals for reporting is between 0.1-2 minutes. The longer periods may provide a continuous report of the power consumption data without drawing too much power from the power supply.

According to an embodiment of the present invention, the current monitoring unit comprises a fuse. Advantageously, the electronic device may have both the function of monitoring the power consumption of the electronic unit and the function of a fuse.

According to an embodiment of the present invention, the electronic device further comprises a fuse adapter for mounting a standard fuse component.

According to an embodiment of the present invention, the electronic unit is an Electronic Control Unit (ECU) of the vehicle.

According to an embodiment of the present invention, the receiving unit comprises at least one of: a monitoring system in the vehicle, a mobile phone, and a computer. It is an advantage of the present invention that the power consumption data of the electronic unit is reported wirelessly to different types of receiving units.

According to a second aspect of the present invention, there is provided a fuse box comprising an electronic device according to the above, for monitoring the power consumption of an electronic unit of a vehicle. Advantageously, the electronic device provided in the first aspect of the present invention is arranged to be slotted in such fuse box. Thus, an automotive fuse box may be used for monitoring the power consumption of the electronic unit of the vehicle in a convenient and simple way.

According to a third aspect of the present invention, there is provided a vehicle comprising an electronic device for monitoring the power consumption of an electronic unit according to above. It is advantageously provided a vehicle for which the power consumption of the electronic units for the vehicle is monitored through the electronic device, and may wirelessly report the monitoring data..

Further objectives of, features of, and advantages with, the present invention will become apparent when studying the following detailed disclosure, the drawings, and the appended claims. Those skilled in the art will realize that different features of the present invention can be combined to create embodiments other than those described in the following.

### BRIEF DESCRIPTION OF THE DRAWINGS

The inventive concept, some non-limiting embodiments, and further advantages of the inventive concept will now be described with reference to the drawings in which:
Fig. 1 provides a schematic overview of the structure of the electronic device according to an exemplifying embodiment of the present invention,
Fig. 2a provides an overview of the electronic device comprising a fuse according to an exemplifying embodiment of the present invention,
Fig. 2b provides an overview of the electronic device comprising a slot for mounting a fuse,
Fig. 3 provides a schematic view of the communication between the electronic device and the receiving unit according to one exemplifying embodiment of the present invention.

The drawings are meant to illustrate the configurations of the devices and the functions, thus not meant to represent any size and form of the embodiments.

### DETAILED DESCRIPTION

This and other aspects of the present invention will now be described in more details, with reference to the appended drawings showing embodiment(s) of the invention.

### General Definitions

An electronic unit herein may be any electronic unit used by a vehicle, inside or outside of the vehicle. The electronic unit may be installed and/or embedded into an automotive electronic system. Alternatively, it may be a stand-alone unit arranged to be connected to a vehicle with any suitable means.

Alternatively, and preferably, the electronic unit may be an electronic unit comprising multiple electronic components and is configured to perform various functions of a vehicle, including controlling, programming, calculating, monitoring, or displaying etcetera.

The electronic unit may include functions configured to be used in a different system and/or machinery other than in a vehicle, for example but not limited to, a testing instrument, programmable machinery, factory equipment etc.

Alternatively, the electronic unit may be arranged on an electric vehicle.

The electronic unit may be an Electronic Control Unit (ECU). The ECU may be used in a vehicle, such as an electric vehicle, gasoline-, diesel-, hydrogen-driven vehicles, semi-trucks, etc.

The term "power consumption" here means substantially the energy consumption of the electronic unit calculated based on a current and voltage value. It is an object of the present invention to provide an electronic device for monitoring the power consumption by detecting the current through the current monitoring unit.

The current monitoring unit is configured to monitor the power consumption of the electronic unit. The current monitoring unit may be a current and/or voltage monitoring unit. The current monitoring unit may be a current sensing component, such as an electrical wire with a predefined resistance. Alternatively, the current monitoring unit may include one or more electronic components that are used to measure the current and/or voltage that is present on/through the unit.

The current monitoring unit may comprise more than one electronic component including a wire, a fuse, a resistor, a current sensing resistor, a voltage divider, an Analog-to-Digital Converter (A/D) converter, a comparator, an amplifier, a current mirror, a processor, a storage, or any other suitable components needed for performing the current monitoring function. Preferably, the current monitoring unit may incorporate, externally or internally, a fuse having a maximal current limitation for protecting the electronic unit by melting or disconnecting when an over current is generated. The electronic device is advantageously configured so that the current monitoring unit may convert the monitored current/voltage value to a digital data or transmit the current/voltage value to another unit for converting and processing to a digital data format.

The electronic device will be elaborated in combination with the figures below.

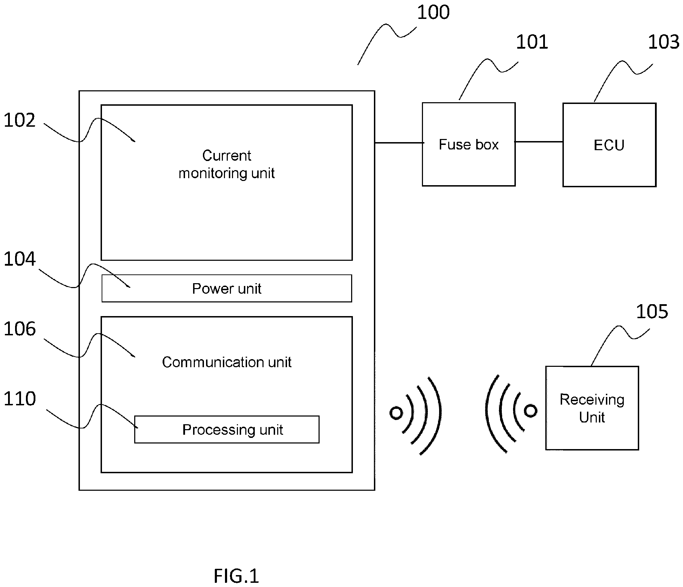

Fig. 1 provides a schematic view of the structure of the electronic device 100 according to an exemplifying embodiment of the present invention. The electronic device 100 for monitoring the power consumption of an electronic unit 103 for a vehicle comprises a current monitoring unit 102 for monitoring the current drawn by the electronic unit 103. The electronic device 100 further comprises a communication unit 106 for reporting the power consumption data of the electronic unit 103 to a receiving unit 105. The communication unit 106 is a low-power wireless communication unit. The electronic device 100 is arranged to be fitted in a standard fuse slot of a fuse box 101 connected to the electronic unit 103, such that there is no external wire for the connection between the electronic device 100 and the fuse slot. The electronic device 100 may comprise a power unit 104 for powering the electronic device 100.

Since the low-power wireless communication unit 106 is configured to work with a very low power consumption itself, it may be powered by a button cell battery. Preferably, the power supply to the low-power wireless communication unit 106 is arranged close to the communication unit 106 on the electronic device 100, which may ensure a small footprint of the electronic device 100. When using a button cell battery as the power supply, it may include any suitable type of the button cell battery on the market for industrial or non-industrial use. The power supply to the low-power wireless communication unit 106 is intended to be long lasting, providing up to two years of usage.

According to some other embodiments, the power supply may be used to power the electronic device 100 as a whole. Alternatively, the communication unit 106 may be powered by the same power supply as that to the electronic device 100, such as a vehicle power battery pack.

The communication unit 106 of the electronic device 100 may perform any processing needed in reporting the data, such as converting, calculating, processing, storing, transmitting, broadcasting the received data by any suitable means. The communication unit 106 may comprise one or more components for performing the above-mentioned functions. According to some embodiments, the communication unit 106 may comprise one or more processing units 110 for performing different functions which will be described below.

According to one exemplifying embodiment in Fig. 1, the electronic device 100 further comprises a processing unit 110 for determining whether the power consumption of the electronic unit 103 exceeds a threshold. According to some embodiments, the processing unit 110 may be a logical unit. According to some further embodiments, the processing unit 100 may be implemented by software, or a combination of the software and hardware. According to some embodiments, the processing unit 110 may be arranged in the communication unit 106. According to some other embodiments, the processing unit 110 may be arranged separately. It is advantageously configured to perform necessary functions for determining whether the power consumption of the electronic unit 103 is over a threshold value or not.

By the term "threshold", it is here meant substantially a predetermined current and/or voltage value, at and/or above which the communication unit is configured to report the power consumption data in real time, periodically or on request. By predetermining the threshold, the electronic device 100 may report the power consumption data when the power consumed by the electronic unit 103 exceeds the threshold. The reporting of the power consumption data may stop when the power consumed by the electronic unit 103 goes below the threshold. According to some embodiments, the threshold has a predetermined current value of 5mA. According to some other embodiments, the threshold preferably has a predetermined current value of 50mA. The threshold value may be reconfigured through the electronic device, e.g., by the processing unit, the communication unit, and/or the receiving unit. According to Fig. 1, the current monitoring unit 102 may continuously or discontinuously monitor the power consumption of the electronic unit 103, the processing unit 110 is configured to instruct the communication unit 106 to report the power consumption of the electronic unit 103 to the receiving unit 105 when the power consumption of the electronic unit 103 exceeds the predetermined threshold value. According to some other embodiments, the processing unit 110 of the electronic device is configured to record measured values of the power consumption of the electronic unit periodically and save the recorded values for later reporting to the receiving unit 105. The recorded values may be saved with timestamps. According to some embodiments, the communication unit 106 may report the recorded, timestamped power consumption data upon connection to the receiving unit 105.

It is advantageously provided that the processing unit 110 may determine whether to report the power consumption data of the electronic unit 103 or not based on predetermined conditions.

The receiving unit 105 herein may comprise any suitable units for receiving the data reported by the communication unit 106. Optionally, the receiving unit may be a unit included as a part of a device. Alternatively, it may be a separate stand-alone device suitable for receiving the power consumption data reported by the communication unit 106. A receiving unit 105 may comprise an external device, wirelessly communicating with the receiving unit. The receiving unit 105 may include a processing unit for configuring the predetermined threshold value and communicating the threshold value through the communication unit. The processing unit of the receiving unit 105 may include software and/or interface for configuring the threshold.

Furthermore, the current occurred through the current monitoring unit 102 may be a relatively low value, such as 5 mA or even less. Likewise, the voltage generated through the current monitoring unit 102 may be a relatively low value. In some preferred embodiments, the current monitoring unit 102 may detect a higher current value, such as 50mA. It is an advantage of the present invention to provide a sensitive current and voltage monitoring function, thereby monitoring the power consumption occurred at a low level for detecting unexpected current draw. With the arrangement of the processing unit 110 and the predefined threshold, the current drawn by the electronic unit 103 is reported to the receiving unit 105 only when it exceeds the threshold value.

The current monitoring unit 102 is configured to minimize disruption to the current passing through it. It may also have a low series resistance. The current that flows through the current monitoring unit 102 may be a small parasitic current of the electronic device 100 itself, or it may be the working current of the electronic unit 103 being monitored by the device. Working currents for the monitored units may reach up to 40A. In some cases, the current draw of the electronic unit 103 may be unexpectedly high, indicating unexpected power consumption or a failure to power off when it should be idle. This may be due to the electronic unit consuming power from the battery of the vehicle when it is not supposed to. The unexpected power consumption may also be due to that the electronic unit is not powered off as expected when the vehicle is parked, when all electronic units are supposed to be powered off. The current monitoring unit 102 may detect these instances of unexpected current draw and alert the user.

The power consumption data of the electronic unit 103 may be collected for research and/or analysis purpose, such as tracing current leakage and daily or periodically monitoring of power consumption etc. According to some embodiments, the real time current draw of a test car may be monitored over the course of a few days and the monitored data may be used to properly dimension fuses and cable diameter.

In one exemplified embodiment, a Bluetooth Low Energy (BLE) device may be used as the communication unit 106 in any of the previous described embodiments. BLE is configured to consume a low power. A BLE device may be driven by a button cell battery for working for a long period of up to two years. It is a cost-efficient device for being integrated with the electronic device 100. A BLE device may also reduce the complexity of manufacturing of the electronic device 100. The BLE device may further include the processing unit 110. The BLE device may be configured to save power using specific advertising intervals. Preferably, a period between every two consecutive advertising intervals for reporting is between 0.1-2 minutes.

By reporting the power consumption data at specific advertising intervals, the power consumption of the low-power communication unit is optimized so that the power supply, such as a button cell battery, may last longer. The BLE device may work with low power when advertising and/or logging, probably less than 100pA. The BLE device provides reliable transmission to the receiving unit over predetermined distances. The communication unit 106 of the electronic device 100, may be an automotive qualified BLE device.

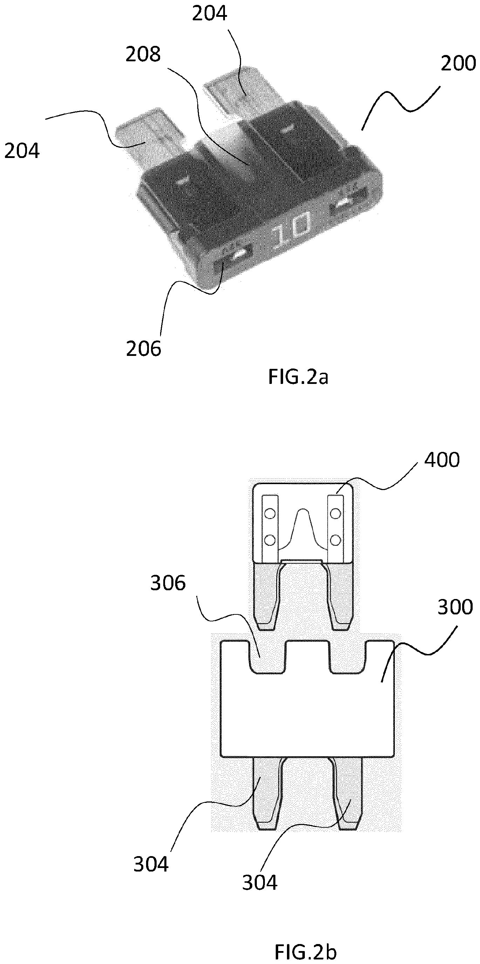

The embodiment in Fig. 2a will be elaborated in combination with Fig. 1 and the same reference signs represent the same components. According to Fig. 2a, one exemplifying embodiment of the present invention is described herein. An electronic device 200 for monitoring power consumption of an electronic unit of a vehicle is arranged to be fitted in a standard fuse slot used for the electronic unit 103, comprising two connectors 204. The connectors 204 are preferably the same connectors as for a standard automotive fuse. The connectors 204 may be in another form or shape used for a fuse slot, which are not limited by the drawing. The electronic device 200 comprises all units of the electronic device 100 described in Fig. 1, and further comprises a fuse wire 208, for protecting the electronic unit 103 from over current. According to some embodiments, the fuse wire 208 may be a part of the current monitoring unit 102 of the electronic device 100, such that the fuse wire 208 may act as both a traditional fuse and at the same time provide the current monitoring function.

Advantageously, there is provided an electronic device 200 arranged to be fitted in a standard fuse slot of a fuse box 101 for the electronic unit 103 for monitoring the power consumption therein. The electronic device 200 may be a plug-to-run fuse.

Advantageously, the electronic device 200 may have a small footprint similar to, or the same as, an automotive fuse. It is beneficial that such an electronic device 200 has the same footprint as an automotive fuse; it is convenient to apply the electronic device 200 directly to a fuse slot of a fuse box 101 in a vehicle, or to a fuse slot of any other electronic unit.

By the term "fuse slot", it is meant substantially the same as any alternative names such as, a fuse socket, a fuse holder, or a fuse plug, etcetera, which is not limited to the names presented herein. A fuse slot may also be a suitable arrangement configured to receive a fuse or an electronic device having the same connector arrangement as the fuse. The fuse slot may include different forms and types for any standard fuses. The fuse slot may be provided in a standard fuse box of a vehicle. Alternatively, the fuse slot may be provided on a stand-alone electronic unit, such as an amplifier unit. The fuse slot may be provided on an unlimited variety of devices, which may all fall into the scope of the claimed subject matter. Advantageously, the electronic device presented in the present invention, may be manufactured as a standard device, such as an automotive fuse, which is economic beneficial. The fuse slot may include all common fuse types, such as, Maxi, ATO, Mini, J-Case, Low profile J-Case, Micro, Micro 2 & Micro 3.

The electronic device 200 is beneficial having the arrangement to be fitted in a standard fuse slot for the electronic unit 103, since standard components and connectors for the electronic unit 103 of a vehicle may not need to be changed for using such an electronic device 200. The electronic device 200 may be arranged to slot easily into a typical automotive fuse slot.

Alternatively, the electronic device 200 may be arranged to be slotted into a back slot of a fuse, such as a "piggyback" on the back of a standard automotive fuse. In Fig. 2a, the slot 206 shows an example of a "piggyback" slot of a standard automotive fuse. Alternatively, the slot 206 may also be used as an adapter for mounting a standard fuse, preferably a standard automotive fuse. The electronic device 200 thereby provides the fuse with a function of monitoring the power consumption of the electronic unit 103 in addition to the function of over current protection. It is an advantage of the present invention that the electronic device 200 provided may have a small footprint as a standard fuse, which may be easily fitted in a fuse slot without removing or adapting any devices around it.

The embodiment in Fig. 2b will be elaborated in combination with Fig. 1 and the same reference signs represent the same components. According to Fig. 2b, one exemplifying embodiment of the present invention is described herein. An electronic device 300 for monitoring power consumption of an electronic unit of a vehicle is arranged to be fitted in a standard fuse slot used for the electronic unit 103, comprising two connectors 304. The connectors 304 are preferably the same connectors as for a standard automotive fuse. The connectors 304 may be in another form or shape used for a fuse slot, which are not limited by the drawing. The electronic device 300 comprises all units of the electronic device 100 described in Fig. 1, and further comprises a fuse connector slot 306, for mounting a standard fuse 400 to protect the electronic unit 103 from over current. The fuse connector slot 306 may be any type of connector for mounting a standard fuse component, the standard fuse component may preferably be an automotive fuse. The electronic device 300 is therefore configured to incorporate with the fuse 400 to monitor and protect the electronic unit 103, with the current monitoring function provided by the electronic device 300 and the over current protection function provided by the fuse 400.

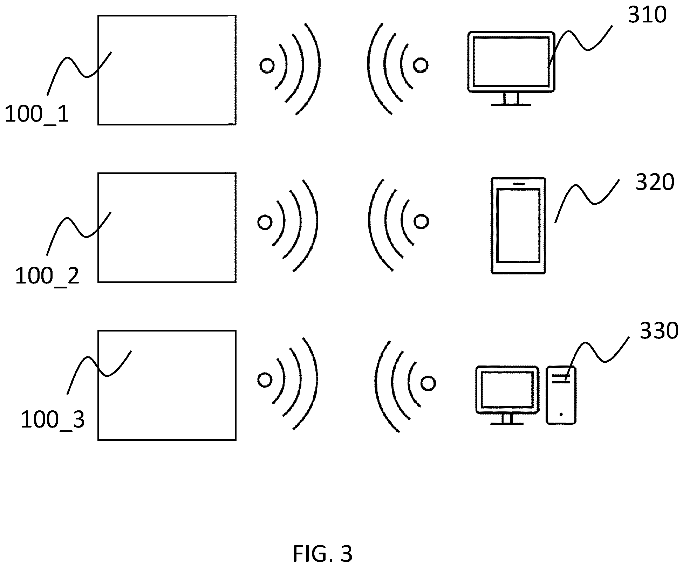

Fig. 3 provides a schematic view of the communication between the electronic devices 100_1, 100_2, 100_3 and the receiving units 310, 320, 330 according to one exemplifying embodiment of the present invention. It will be elaborated in combination with Fig. 1 and Fig. 2a.

In Fig. 3, the electronic devices 100_1, 100_2, 100_3, as exemplified therein, are configured to report the power consumption data of the electronic units 103 to one or more receiving units, such as 310, 320 and 330. The electronic devices 100_1, 100_2, 100_3 may be at least one of the embodiments of electronic devices 100 and/or 200 provided in Fig. 1 and Fig. 2a. The electronic device 100_1,100_2, 100_3 may be the same or different from each other according to the present invention.

As shown in Fig. 3, the receiving units 310, 320 and 330 are exemplified as: a monitoring system 310 in the vehicle, a mobile phone 320 and a computer 330. It is an advantage of the present invention that the power consumption data of the electronic units 103 monitored by the electronic devices 100_1, 100_2, 100_3 are reported wirelessly to at least one of the receiving units 310, 320 and 330.

The receiving unit may comprise software and/or hardware. The receiving unit can be, but is not limited to, a mobile phone, a mobile phone App, a cloud storage, a database, a user interface, a panel, a display, a processor, a voice reporting device and much more. Optionally, the receiving unit may be integrated and/or installed on the electronic unit 103, such as an LCD display.

The receiving unit 320 may receive data from the communication unit 106 when the receiving unit 320 is approaching one of the electronic devices 100_1, 100_2, 100_3. According to some embodiments, when the mobile phone 320 in Fig. 3 approaches one of the electronic devices 100_1, 100_2, 100_3, the power consumption data is then received by the mobile phone 320. It is not limited to above embodiments; any suitable technologies may also be used for such a function.

Preferably, the receiving units 310, 320 and 330 may be a mobile phone and/or an application installed on the mobile phone. The mobile phone application may work on multiple platforms, such as on an iOS or an Android system. Alternatively, the receiving unit may be a display unit of the vehicle.

As shown in one example in Fig. 3, the receiving unit may comprise multiple receiving units, such as 310, 320 and 330, which may receive the data of the communication units of the electronic devices 100_1, 100_2, 100_3 simultaneously or separately. The receiving units 310, 320 and 330 may communicate with more than one of the electronic devices 100_1, 100_2, 100_3 respectively.

The receiving unit may be configured to register multiple electronic devices 100_1, 100_2, 100_3 for monitoring power consumptions of multiple electronic units respectively. The electronic devices 100_1, 100_2, 100_3 or the communication units of them therein, each may be registered with a unique QR code for generating a universally unique ID (UUID) in the receiving unit. The QR code may be scanned, respectively, to trigger the communication of the electronic devices 100_1, 100_2, 100_3 with the receiving unit. User interfaces and software solutions may also be implemented accordingly. The registered multiple electronic devices may be added to an APP or a software list of the receiving unit when the QR code of each electronic device is scanned, by showing their UUIDs. Any native or cross-platform front-end may be used for scanning the QR code, for triggering the communication, for electing the desired electronic devices to request or scan for the power consumption data, and for checking event history log of the electronic device whose QR code is scanned.

The receiving unit may further comprise a cloud-hosted service, which can be, but are not limited to, AWS cloud service or Firebase, which are suitable for data collection and management. The backend work of the receiving unit may include login and logout functions for multiple electronic devices to receive respective power consumption data. The power consumption data may include power consumption data in real time and/or power consumption data over a period.

In Fig 3, the communication units of the electronic devices 100_1, 100_2, 100_3 are configured to report the power consumption data at specific advertising intervals to the receiving units 310, 320 and 330. The reporting advertising intervals may be the same or different among the electronic devices 100_1, 100_2, 100_3. The period between every two consecutive reporting advertising intervals of the electronic devices 100_1, 100_2, 100_3 may be a predetermined period between 0.1-2 minutes, or a longer period. Alternatively, the electronic devices 100_1, 100_2, 100_3 may not use any period-based advertising intervals. The electronic devices may be triggered to report by a threshold of the monitored power consumption. The electronic devices may be configured to check whether the threshold is exceeded with start of periodic advertising intervals. They may also be triggered by a reporting command generated by the processing unit, based on a request sent from the receiving unit.

The electronic device provided by the present invention has the advantage of wirelessly reporting the power consumption of the monitored electronic unit. In one embodiment, it may provide a wireless monitoring system by connecting a plurality of the electronic devices to the fuse boxes of the ECUs on a vehicle. The monitoring system thereby may provide traceability of the power consumption of each ECU and further provide the capability of identifying the root cause of a battery problem, e.g., a battery drain issue. The monitoring data may be wirelessly received by a Battery Management System of a vehicle for improving the management of the battery life.

The person skilled in the art realizes that the present invention by no means is limited to the preferred embodiments described above. On the contrary, many modifications and variations are possible within the scope of the appended claims. For example, one or more of the electronic devices 100, 200, 100_1, 100_2, and 100_3, may have different shapes, dimensions and/or sizes.

## Claims

1. An electronic device (100, 200, 300, 100_1, 100_2, 100_3) for monitoring power consumption of an electronic unit (103) for a vehicle, comprising:
- a current monitoring unit (102) for monitoring the power consumption of the electronic unit (103);
- a communication unit (106) for reporting the power consumption data of the electronic unit (103) to a receiving unit (105);
wherein the communication unit (106) is a low-power wireless communication unit, and
the electronic device (103) is arranged to be fitted in a standard fuse slot of a fuse box (101) connected to the electronic unit (103).

2. An electronic device (100, 200, 300, 100_1, 100_2, 100_3) according to claim 1, further comprising a power unit (104) for powering the electronic device (100), wherein the power unit (104) is a button cell battery.

3. An electronic device (100, 200, 300, 100_1, 100_2, 100_3) according to any one of preceding claims, being configured to monitor the power consumption of the electronic unit (103) when the electronic unit (103) is in an idle status and/or in a working status.

4. An electronic device (100, 200, 300, 100_1, 100_2, 100_3) according to any one of preceding claims, wherein the power consumption data reported by the communication unit is at least one of: real-time monitoring data, periodically monitoring data and recorded monitoring data.

5. An electronic device (100, 200, 100_1, 100_2, 100_3) according to any one of preceding claims, further comprising a processing unit (110) for determining whether the power consumption of the electronic unit (103) exceeds a threshold.

6. An electronic device (100, 200, 300, 100_1, 100_2, 100_3) according to any one of preceding claims, the communication unit (106) is configured to report the power consumption of the electronic unit (103) upon connection to the receiving unit (105) or when the power consumption exceeds the threshold.

7. An electronic device (100, 200, 300, 100_1, 100_2, 100_3) according to any one of preceding claims, wherein the communication unit (106) is at least one of: a Bluetooth Low Energy (BLE) communication unit, a Zigbee unit and Z-wave unit.

8. An electronic device (100, 200, 300, 100_1, 100_2, 100_3) according to any one of preceding claims, the communication unit (106) is configured to report the power consumption data at specific advertising intervals to the receiving unit (105).

9. An electronic device (100, 200, 300, 100_1, 100_2, 100_3) according to claim 7, wherein a period between every two consecutive advertising intervals for reporting is between 0.1-2 minutes.

10. An electronic device (200) according to any one of preceding claims, wherein the current monitoring unit (102) comprises a fuse (208).

11. An electronic device (200,300) according to any one of preceding claims, further comprising a fuse adapter (206,306) for mounting a standard fuse component.

12. An electronic device (100, 200, 300, 100_1, 100_2, 100_3) according to any one of preceding claims, wherein the electronic unit (103) is an Electronic Control Unit (ECU) of the vehicle.

13. An electronic device (100, 200, 300, 100_1, 100_2, 100_3) according to any one of preceding claims, wherein the receiving unit (105) comprises at least one of: a monitoring system (310) in the vehicle, a mobile phone (320) and a computer (330).

14. A fuse box (101) comprising an electronic device (100, 200, 300, 100_1, 100_2, 100_3) according to any one of preceding claims.

15. A vehicle comprising an electronic device (100, 200, 300, 100_1, 100_2, 100_3) according to any one of claims 1- 13.
